# EUROPÄISCHE PATENTSCHRIFT

(11) **EP 3 134 673 B1**
(45) Veröffentlichungstag und Bekanntmachung des Hinweises auf die Patenterteilung: **07.11.2018**
(21) Anmeldenummer: 15705910.6
(22) Anmeldetag: 12.02.2015
(51) Int. Cl.: F16L 55/05, F04B 11/00

(54) **DÄMPFUNGSVORRICHTUNG**
DAMPING DEVICE
DISPOSITIF D'AMORTISSEMENT

(30) Priorität: 24.04.2014 DE 102014005822; 24.04.2014 DE 202014006687 U
(43) Veröffentlichungstag der Anmeldung: 01.03.2017
(73) Patentinhaber: Hydac Technology GmbH, 66280 Sulzbach/Saar (DE)
(72) Erfinder: KLOFT, Peter, 56235 Ransbach-Baumbach (DE); THIELECKE, Frank, 21614 Buxtehude (DE); BEHR, Robert Marinus, 28844 Weyhe (DE); WAITSCHAT, Arne, 21129 Hamburg (DE)
(74) Vertreter: Bartels und Partner, Patentanwälte
(86) Internationale Anmeldenummer: PCT/EP2015/000306
(87) Internationale Veröffentlichungsnummer: WO 2015/161907

(56) Entgegenhaltungen:
- EP-A2- 2 107 287
- FR-A1- 2 686 955
- US-A- 4 164 954

## Beschreibung

Die Erfindung betrifft eine Dämpfungsvorrichtung, insbesondere zum Dämpfen oder Vermeiden von Druckstößen, wie Pulsationen, in hydraulischen Versorgungskreisläufen, mit den Merkmalen im Oberbegriff von Anspruch 1.

Dämpfungsvorrichtungen dieser Art sind Stand der Technik. Solche Hydrodämpfer, auch Schalldämpfer oder Silencer genannt, dienen der Minderung von Schwingungen, die durch Druckpulsationen erzeugt sind, die einem betreffenden Hydrosystem periodisch aufgeprägt werden, insbesondere durch den Betrieb von Hydropumpen. Wie in dem Dokument DE 102 17 080 C1 aufgezeigt ist, weisen die bekannten Dämpfungsvorrichtungen dieser Gattung ein Dämpfungsgehäuse in Form eines Kreiszylinders auf, der an beiden axialen Endbereichen kugelförmig abgerundet ist, wobei sich Fluideinlass und Fluidauslass koaxial zur Zylinderachse an je einem Endbereich befinden. Als Dämpfungsraum, den der Fluidstrom von Fluideinlass zu Fluidauslass durchquert, ist bei diesen Dämpfungsvorrichtungen ein Dämpfungsrohr vorgesehen, das sich zwischen Fluideinlass und Fluidauslass koaxial erstreckt und in der Rohrwand Öffnungen zum das Rohr umgebenden Fluidraum aufweist. Entsprechend dem Zylinderdurchmesser ist der Fluidraum gegenüber der durch das Dämpfungsrohr vorgegebenen, axialen Durchströmungsrichtung radial erweitert.

Die US 4 164 954 beschreibt eine Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem einen Dämpfungsraum umgebenden Dämpfungsgehäuse, das mindestens einen Fluideinlass und mindestens einen Fluidauslass sowie einen sich zwischen Fluideinlass und Fluidauslass erstreckenden Fluidaufnahmeraum aufweist, wobei im Betrieb der Vorrichtung ein Fluidstrom in einer Durchströmungsrichtung vom Fluideinlass kommend in Richtung des Fluidauslasses den Dämpfungsraum durchquert, wobei sich zumindest Teile des Fluidaufnahmeraums in mindestens einer Ausdehnungsrichtung quer zur Durchströmungsrichtung erstrecken, wobei der Fluidaufnahmeraum unmittelbar an den Fluideinlass und an den Fluidauslass angrenzt, und wobei der Hohlraum von zwei parallel zueinander verlaufenden Begrenzungswänden des Dämpfungsgehäuses mit abgeschlossen ist.

Auch die EP 2 107 287 A2 und die FR 2 686 955 A1 offenbaren Dämpfungsvorrichtungen.

Ausgehend von diesem Stand der Technik stellt sich die Erfindung die Aufgabe, eine Dämpfungsvorrichtung der betrachteten Art zur Verfügung zu stellen, die bei einfacher Bauweise sich durch ein vorteilhaftes Betriebsverhalten auszeichnet.

Erfindungsgemäß ist diese Aufgabe durch eine Dämpfungsvorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass Teile des Fluideinlasses und des Fluidauslasses fluchtend zu diesen Begrenzungswänden im Dämpfungsgehäuse verlaufen. Bei einer derartigen Anordnung kann der Durchmesser von als Dämpfungsgehäusebohrungen ausgebildetem Fluideinlass und Fluidauslass gleich groß sein und dem Abstand zwischen den beiden Begrenzungswänden entsprechen.

Es ist ferner vorgesehen, dass der Fluidaufnahmeraum unmittelbar an den Fluideinlass und an den Fluidauslass angrenzt. Bei der durch Wegfall des Dämpfungsrohres vereinfachten Bauweise bildet eine einzige Kavität ein aus Dämpfungsraum und Fluidraum gemeinsam gebildetes Resonatorsystem. Die erfindungsgemäße Vorrichtung zeichnet sich nicht nur durch eine vereinfachte Bauweise, sondern auch durch eine auf ihr Flüssigkeitsvolumen und ihr Gewicht bezogene erhöhte Effizienz aus. Im Vergleich zu bekannten Silencern dieser Gattung, bei denen es zu einer Verstärkung von Pulsationen zwischen Pumpe und Eingang des Silencers kommen kann, ist bei der Erfindung auch diese Gefahr wesentlich verringert.

Eine besonders hohe Effizienz der Dämpfungswirkung ist bei Ausführungsbeispielen erreichbar, bei denen der Fluidaufnahmeraum einen scheibenartig ausgebildeten Hohlraum innerhalb des Dämpfungsgehäuses ausbildet. Die Scheibenform kann hierbei zylindrisch oder als Vieleck ausgebildet sein oder jede andere von der Kreisform abweichende Gestalt besitzen.

Bei einem besonders vorteilhaften Ausführungsbeispiel der Erfindung, bei dem das Dämpfungsgehäuse mehrteilig ausgebildet ist, können folgende Bauelemente vorgesehen sein:
- ein topfartiges Bodenteil, das eine scheibenartige Mittenausnehmung mit der einen Begrenzungswand sowie den Fluideinlass und -auslass aufnimmt, und
- ein flanschartig ausgebildetes Deckelteil, das mit der anderen Begrenzungswand als Teil eines Eingriffsstutzens bei am Bodenteil festgelegtem Deckelteil in die Mittenausnehmung bündig eingreift.

Für die Abdichtung des Hohlraums gegenüber der Umgebung kann am Eingriffsstutzen des Deckelteils eine Dichteinrichtung, insbesondere in Form eines in einer umlaufenden Nut eingesetzten Dichtringes, angeordnet sein, der eine Abdichtung an der Mittenausnehmung des topfartigen Bodenteils bildet.

Für eine druckfeste Ausbildung des Dämpfungsgehäuses kann das Deckelteil, diametral zu seiner Hochachse gegenüberliegend, mehrere Durchgriffsbohrungen aufweisen, die von Festlegeschrauben durchgriffen das Deckelteil am Bodenteil festlegen.

Vorzugsweise sind die Festlegeschrauben unter Freilassen des Bereichs von Fluideinlass und -auslass gleichmäßig entlang eines Außenumfangs am Dämpfungsgehäuse angeordnet, der den scheibenartigen Fluidaufnahmeraum umfasst.

Für die Verbindung mit einem betreffenden Hydrosystem kann am Fluideinlass und/oder am Fluidauslass am Dämpfungsgehäuse eine Aufnahme für einen Dichtring vorgesehen sein, der den Fluideinlass und/oder Fluidauslass umfasst. An Drittbauteilen lässt sich das Dämpfungsgehäuse in der Art eines Festlegeblocks mittels mehrerer Festlegebolzen, die den Bereich des Fluideinlasses und/oder Fluidauslasses umgeben, festlegen.

Nachstehend ist die Erfindung anhand eines in der Zeichnung dargestellten Ausführungsbeispiels im Einzelnen erläutert. Es zeigen:
- Fig. 1: eine gegenüber einer praktischen Ausführungsform etwa im Maßstab 1:3 verkleinert gezeichnete perspektivische Schrägansicht eines Ausführungsbeispiels der erfindungsgemäßen Dämpfungsvorrichtung;
- Fig. 2: einen gegenüber einer praktischen Ausführungsform geringfügig verkleinert gezeichneten Längsschnitt des Ausführungsbeispiels;
- Fig. 3: eine im Maßstab von Fig. 2 und teilweise aufgeschnitten gezeichnete Draufsicht des Bodenteils des Dämpfungsgehäuses des Ausführungsbeispiels;
- Fig. 4: eine Schnittdarstellung entsprechend der Schnittlinie IV-IV von Fig. 3;
- Fig. 5: eine Teilansicht lediglich des den Fluidauslass aufweisenden Anschlussbereichs des Dämpfungsgehäuses des Ausführungsbeispiels;
- Fig. 6: eine der Fig. 5 entsprechende Teilansicht des den Fluideingang aufweisenden Anschlussbereichs;
- Fig. 7: einen gegenüber Fig. 2 bis 4 in größerem Maßstab gezeichneten Längsschnitt lediglich des Deckelteils des Dämpfungsgehäuses; und
- Fig. 8: eine demgegenüber in kleinerem Maßstab gezeichnete perspektivische Schrägansicht des Deckelteils, gesehen auf die einen Eingriffsstutzen bildende Innenseite.

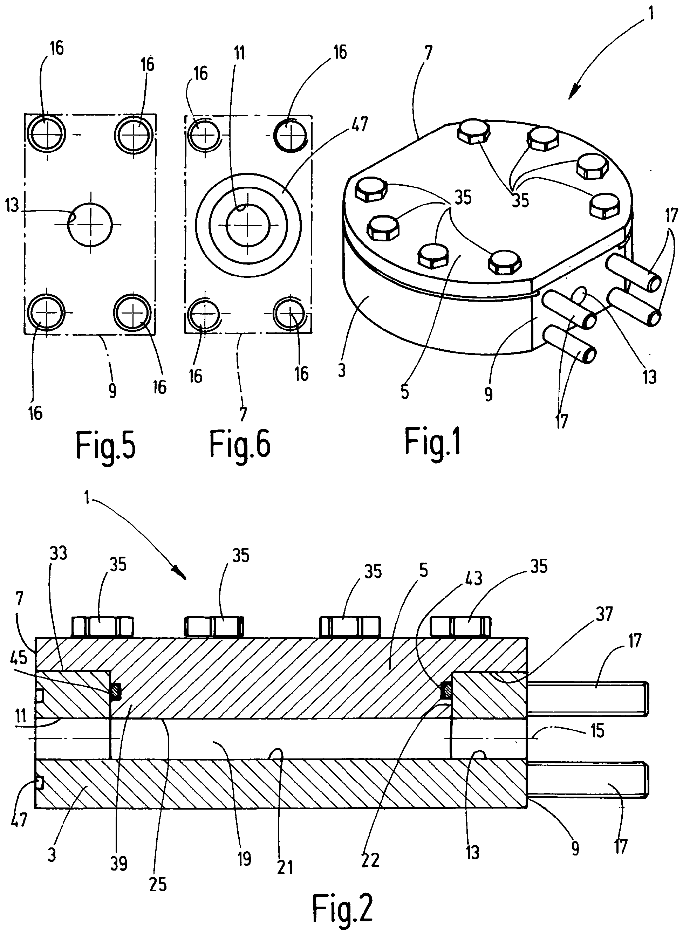

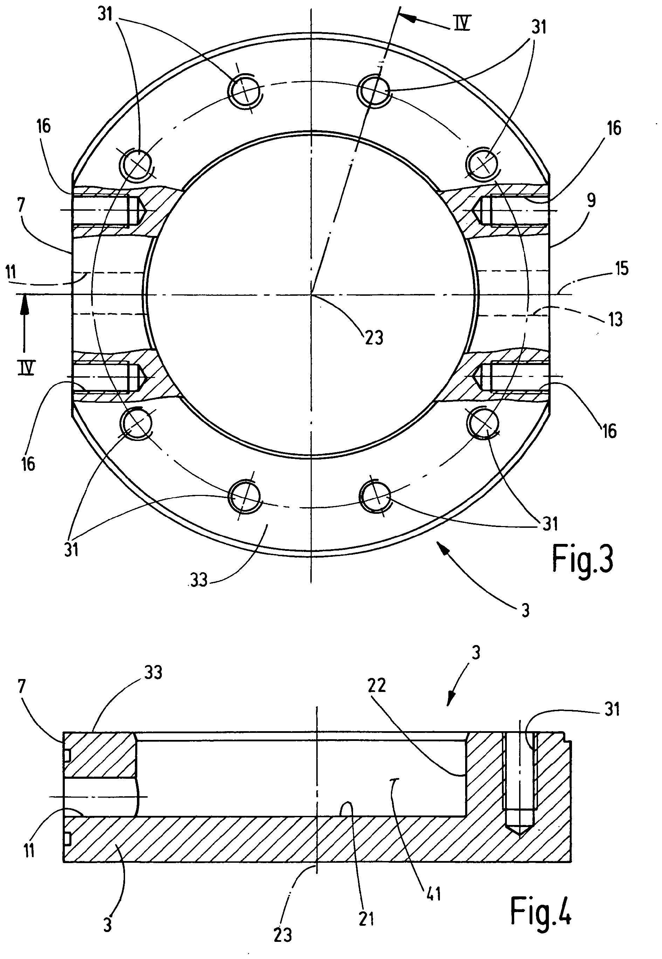

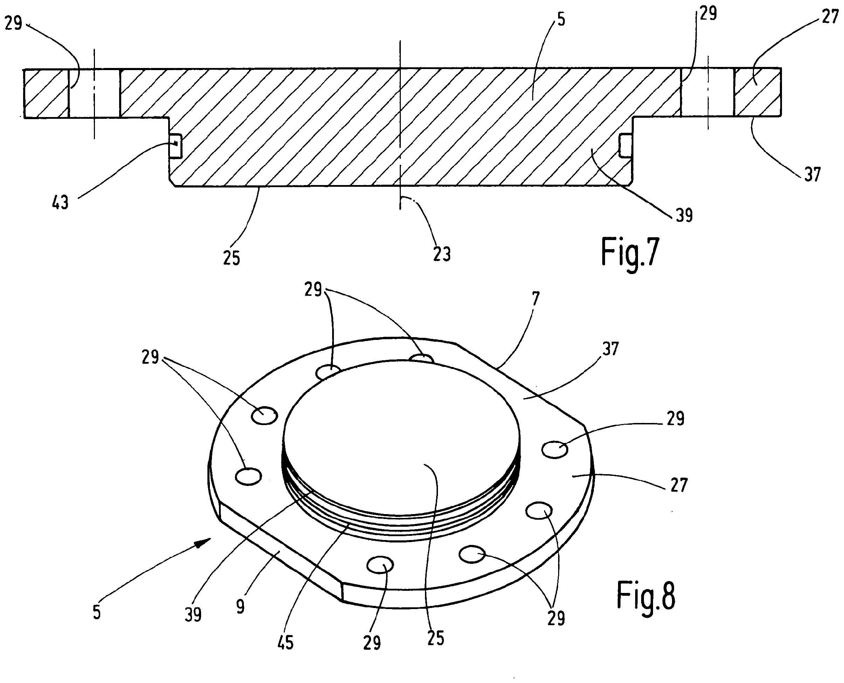

Die Fig. 1 und 2 zeigen das Ausführungsbeispiel der Dämpfungsvorrichtung in zusammengebautem Zustand. Das in diesen Figuren geschlossen dargestellte Dämpfungsgehäuse 1 besteht aus zwei Hauptteilen, nämlich einem Bodenteil 3, das in den Fig. 3 und 4 gesondert dargestellt ist, sowie einem Deckelteil 5, das in den Fig. 7 und 8 gesondert gezeigt ist. Bodenteil 3 und Deckelteil 5 haben jeweils den gleichen Umriss, so dass sie in zusammengebautem Zustand (Fig.1) umfänglich miteinander bündig sind, wobei der Umriss einer Kreislinie entspricht, die jedoch an zwei diametral zueinander gegenüberliegenden Seiten eine ebenflächige Abflachung 7 bzw. 9 aufweist. In dem dem Bodenteil 3 zugehörigen Teil der Abflachung 7 befindet sich der Fluideinlass 11 des Dämpfungsgehäuses 1 und in dem den Bodenteil 3 zugehörigen Teil der Abflachung 9 befindet sich der Fluidauslass 13, wobei Einlass 11 und Auslass 13 mit der in Fig. 3 mit 15 bezeichneten Achse der Durchströmungsrichtung fluchten. An den Abflachungen 7 und 9 befinden sich jeweils vier Gewindebohrungen 16, die in den Eckbereichen der rechteckförmigen Abflachungen 7 und 9 angeordnet sind und die Festlegung des Dämpfungsgehäuses 1 mittels Gewindebolzen 17 (Fig. 1) ermöglichen.

Innerhalb des Dämpfungsgehäuses 1 ist der sich zwischen Fluideinlass 11 und Fluidauslass 13 erstreckende Fluidaufnahmeraum, der gleichzeitig als Dämpfungsraum wirkt, durch eine Kavität in Form eines scheibenartigen Hohlraums 19 gebildet. Dieser hat die Gestalt einer kreisrunden Scheibe in der Form eines flachen Kreiszylinders, dessen eine Scheibenfläche durch eine ebene Wand 21 begrenzt ist, die in dem Bodenteil 3, das durch eine zentrale, vertiefte Mittenausnehmung 41 topfartig ausgebildet ist, dessen innere Bodenfläche bildet. Wie am deutlichsten aus Fig. 4 zu ersehen ist, begrenzt das Bodenteil 3 mit der inneren Seitenwand 22 des Topfes den auf die Zentralachse 23 bezogenen Kreisdurchmesser des kreisscheibenartigen Hohlraums 19. Fluideinlass 11 und Fluidauslass 13 sind jeweils durch Bohrungen in den Abflachungen 7 bzw. 9 gebildet, die in den Hohlraum 19 bündig mit der den inneren Topfboden bildenden Begrenzungswand 21 einmünden.

Die in Fig. 2 obenliegende Begrenzungswand des scheibenförmigen Hohlraums 19 ist durch eine ebene, kreisrunde Wand 25 am Deckelteil 5 gebildet. Bei dem zusammengebauten Zustand, siehe Fig. 2, erstreckt sich die Wand 25, ebenso wie die andere Begrenzungswand 21, bündig mit dem jeweils angrenzenden Fluideinlass 11 und Fluidauslass 13. Wenn Fluideinlass 11 und -auslass 13 bei einem praktischen Ausführungsbeispiel etwa durch je eine Bohrung von 12 mm Durchmesser gebildet sind, hat der scheibenförmige Hohlraum 19 eine Tiefe von 12 mm. Bei einem derartigen Ausführungsbeispiel kann der Innendurchmesser des Hohlraums 19 im Bereich von 100 mm liegen, bei einem Außendurchmesser des Dämpfungsgehäuses 1, außerhalb der Abflachungen 7, 9, von beispielsweise 160 mm.

Wie die Fig. 7 und 8 zeigen, weist das Deckelteil 5 einen Flanschteil 27 mit Befestigungslöchern 29 auf. Das Flanschteil 27 hat den gleichen Umriss wie das Bodenteil 3, ist also kreisrund, abgesehen von den Abflachungen 7 und 9, so dass sich für die zusammengesetzte Gesamtvorrichtung die absatzfreie Außenform ergibt, wie sie in Fig. 1 dargestellt ist. Die Befestigungslöcher 29 sind, wie Fig. 8 zeigt, auf je einem Teilkreisbogen außerhalb des Bereichs der Abflachungen 7, 9 vorgesehen. In Entsprechung zu den Befestigungsbohrungen 29 sind im Bodenteil 3 Gewindebohrungen 31 vorgesehen, die als Sackbohrungen in der ebenflächigen Oberseite 33 des Bodenteils 3 ausgebildet und für Befestigungsschrauben 35 vorgesehen sind, die die Befestigungslöcher 29 durchgreifen, um das Deckelteil 5 mit seiner Flanschfläche 37 an der Oberseite 33 an der offenen Seite des Topfes des Bodenteils 3 festzulegen.

In dem festgelegten Zustand greift ein sich von der Flanschfläche 37 des Deckelteils 5 koaxial erstreckender, kreiszylinderförmiger Eingriffsstutzen 39 in die Mittenausnehmung 41 im Bodenteil 3 ein, die von der inneren Seitenwand 22 des Topfes des Bodenteils 3 begrenzt ist. Dieser Eingriff bei verschraubtem Zustand ist in Fig. 2 gezeigt, wobei die Wand 25 am Ende des Eingriffsstutzens 39 die obere Begrenzungswand des Hohlraums 19 bildet. Für die Abdichtung des Hohlraums 19 gegenüber dem Deckelteil 5 ist in einer in die Seitenwand des Eingriffsstutzens 39 eingearbeitete Ringnut 43 ein Dichtring 45 eingesetzt. Wie Fig. 6 zeigt, ist an der dem Fluideinlass 11 zugeordneten Abflachung 7 eine Ringnut 47 für ein an der Anschlussstelle abdichtendes Dichtelement vorgesehen. Es versteht sich, dass in entsprechender Weise an der dem Fluidauslass zugeordneten Abflachung 9 eine entsprechende Dichtungsanordnung vorgesehen sein kann.

Aufgrund der symmetrischen Gehäusebauform lassen sich Einlass- und Auslassseite gegebenenfalls mit geänderten Dichtgeometrien auch gegeneinander tauschen. Aufgrund des scheibenförmigen Dämpfungsraums mit einer quer zur eigentlichen Durchflussrichtung erweiternden Kavität ist ein Silencer mit hoher Effizienz erreicht, der bezogen auf sein vorgebbares Flüssigkeitsvolumen ein geringes Gewicht besitzt. Ferner kommt es nur, wenn überhaupt, zu einer geringen Verstärkung zwischen dem Silencer und einer an diesen anschließbaren Hydropumpe.

## Patentansprüche

1. Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem einen Dämpfungsraum (19) umgebenden Dämpfungsgehäuse (1), das mindestens einen Fluideinlass (11) und mindestens einen Fluidauslass (13) sowie einen sich zwischen Fluideinlass (11) und Fluidauslass (13) erstreckenden Fluidaufnahmeraum (19) aufweist, wobei der Fluidaufnahmeraum (19) gleichzeitig den Dämpfungsraum (19) bildet, wobei im Betrieb der Vorrichtung ein Fluidstrom in einer Durchströmungsrichtung (15) vom Fluideinlass (11) kommend in Richtung des Fluidauslasses (13) den Dämpfungsraum (19) durchquert, wobei sich zumindest Teile des Fluidaufnahmeraums (19) in mindestens einer Ausdehnungsrichtung quer zur Durchströmungsrichtung (15) erstrecken, sodass sich der Fluidaufnahmeraum (19) gegenüber dem Fluideinlass (11) bzw. Fluidauslass (13) in der Ausdehnungsrichtung erweitert, wobei der Fluidaufnahmeraum (19) unmittelbar an den Fluideinlass (11) und an den Fluidauslass (13) angrenzt, und wobei der Fluidaufnahmeraum (19) von zwei parallel zueinander verlaufenden Begrenzungswänden (21, 25) des Dämpfungsgehäuses (1) mit abgeschlossen ist, **dadurch gekennzeichnet, dass** Teile des Fluideinlasses (11) und des Fluidauslasses (13) fluchtend zu diesen Begrenzungswänden (21, 25) im Dämpfungsgehäuse (1) verlaufen.

2. Dämpfungsvorrichtung nach Anspruch 1, **dadurch gekennzeichnet, dass** der Fluidaufnahmeraum einen scheibenartig ausgebildeten Hohlraum (19) innerhalb des Dämpfungsgehäuses (1) ausbildet.

3. Dämpfungsvorrichtung nach Anspruch 2, **dadurch gekennzeichnet, dass** der scheibenartige Hohlraum (19) zylindrisch oder als Vieleck ausgebildet ist.

4. Dämpfungsvorrichtung nach einem der vorstehenden Ansprüche, **dadurch gekennzeichnet, dass** der Fluidaufnahmeraum (19) zwischen dem Fluideinlass (11) und dem Fluidauslass (13) derart Hindernisfrei ausgebildet ist, dass er frei von Dämpfungselementen gehalten ist.

5. Dämpfungsvorrichtung nach einem der vorstehenden Ansprüche, **dadurch gekennzeichnet, dass** der Durchmesser von als Dämpfungsgehäusebohrungen ausgebildetem Fluideinlass (11) und Fluidauslass (13) gleich groß ist und dem Abstand zwischen den beiden Begrenzungswänden (21, 25) entspricht.

6. Dämpfungsvorrichtung nach einem der vorstehenden Ansprüche, **dadurch gekennzeichnet, dass** das Dämpfungsgehäuse (1) mehrteilig ausgebildet ist
- mit einem topfartigen Bodenteil (3), das eine scheibenartige Mittenausnehmung (41) mit der einen Begrenzungswand (21) sowie den Fluideinlass (11) und Fluidauslass (13) aufnimmt, und
- mit einem flanschartig ausgebildeten Deckelteil (5), das mit der anderen Begrenzungswand (25) als Teil eines Eingriffsstutzens (39) bei am Bodenteil (3) festgelegtem Deckelteil (5) in die Mittenausnehmung (41) bündig eingreift.

7. Dämpfungsvorrichtung nach Anspruch 6, **dadurch gekennzeichnet, dass** am Eingriffsstutzen (39) des Deckelteils (5) eine Dichteinrichtung, insbesondere in Form eines in einer umlaufenden Nut (43) eingesetzten Dichtringes (45), angeordnet ist, der den Fluidaufnahmeraum (19) als Bestandteil der Mittenausnehmung (41) gegenüber der Umgebung abdichtet.

8. Dämpfungsvorrichtung nach Anspruch 6 oder 7, **dadurch gekennzeichnet, dass** das Deckelteil (5), diametral zu seiner Hochachse (23) gegenüberliegend, mehrere Durchgriffsbohrungen (29) aufweist, die von Festlegeschrauben (35) durchgriffen das Deckelteil (5) am Bodenteil (3) festlegen.

9. Dämpfungsvorrichtung nach Anspruch 8, **dadurch gekennzeichnet, dass** die Festlegeschrauben (35) unter Freilassen des Bereichs (7, 9) von Fluideinlass (11) und Fluidauslass (13) gleichmäßig entlang eines Außenumfanges am Dämpfungsgehäuse (1) angeordnet sind, der den scheibenartigen Fluidaufnahmeraum (19) umfasst.

10. Dämpfungsvorrichtung nach einem der vorstehenden Ansprüche, **dadurch gekennzeichnet, dass** am Fluideinlass (11) und/oder am Fluidauslass (13) im Dämpfungsgehäuse (1) eine Aufnahme (47) für einen Dichtring vorgesehen ist, der den Fluideinlass (11) und/oder Fluidauslass (13) umfasst.

11. Dämpfungsvorrichtung nach einem der vorstehenden Ansprüche, **dadurch gekennzeichnet, dass** in der Art eines Festlegeblocks mit mehreren Festlegebolzen (17), die den Bereich (7, 9) des Fluideinlasses (11) und/oder Fluidauslasses (13) umgeben, sich das Dämpfungsgehäuse (1) an Drittbauteilen festlegen lässt.

## Claims

1. A damping device, in particular for damping or preventing pressure shocks, such as pulsations, in hydraulic supply circuits, preferably in the form of a silencer, with a damping housing (1) surrounding a damping chamber (19), which housing has at least one fluid inlet (11) and at least one fluid outlet (13) as well as a fluid receiving chamber (19) extending between fluid inlet (11) and fluid outlet (13),
wherein the fluid receiving chamber (19) simultaneously forms the damping chamber (19),
wherein, during operation of the device, a fluid flow coming from the fluid inlet (11) in a through-flow direction (15) traverses the damping chamber (19) in the direction of the fluid outlet (13),
wherein at least parts of the fluid receiving chamber (19) extend in at least one direction of extension transverse to the through-flow direction (15), with the result that the fluid receiving chamber (19) expands in the direction of extension opposite the fluid inlet (11) or fluid outlet (13),
wherein the fluid receiving chamber (19) directly abuts against the fluid inlet (11) and fluid outlet (13), and
wherein the fluid receiving chamber (19) is surrounded by two partition walls (21, 25) of the damping housing (1) running parallel to one another, **characterised in that** parts of the fluid inlet (11) and fluid outlet (13) run flush to these partition walls (21, 25) in the damping housing (1).

2. The damping device according to claim 1, **characterised in that** the fluid receiving chamber forms a disk-like void (19) within the damping housing (1).

3. The damping device according to claim 2, **characterised in that** the disk-like void (19) is designed cylindrical or as a polygon.

4. The damping device according to one of the preceding claims, **characterised in that** the fluid receiving chamber (19) between the fluid inlet (11) and the fluid outlet (13) is designed to be unobstructed such that it is kept free of damping elements.

5. The damping device according to one of the preceding claims, **characterised in that** the diameter of the fluid inlet (11) and fluid outlet (13), designed as damping housing bores, is the same and corresponds to the distance between the two partition walls (21, 25).

6. The damping device according to one of the preceding claims, **characterised in that** the damping housing (1) is formed with multiple parts
- with a pot-like bottom part (3), which accommodates a disk-like central recess (41) with the one partition wall (21) as well as the fluid inlet (11) and fluid outlet (13), and
- with a cover part (5) designed as a flange which, with the other partition wall (25) as part of an engagement connection (39) with the cover part (5) fixed to the bottom part (3), engages flush in the central recess (41).

7. The damping device according to claim 6, **characterised in that** a sealing means, in particular in the form of a sealing ring (45) inserted in a circumferential groove (43), is arranged on the engagement connection (39) of the cover part (5), sealing the fluid receiving chamber (19) from the environment as a component of the central recess (41).

8. The damping device according to claim 6 or 7, **characterised in that** the cover part (5) has multiple through-bores (29) diametrically opposite its vertical axis (23) with fixing screws (35) passing through these bores to fix the cover part (5) to the bottom part (3).

9. The damping device according to claim 8, **characterised in that** the fixing screws (35) are arranged uniformly along an outer periphery on the damping housing (1), which encompasses the disk-like fluid receiving chamber (19), while leaving the area (7, 9) of the fluid inlet (11) and fluid outlet (13) open.

10. The damping device according to one of the preceding claims, **characterised in that** a seating (47) for a sealing ring is provided at the fluid inlet (11) and/or at the fluid outlet (13) in the damping housing (1), which sealing ring encompasses the fluid inlet (11) and/or the fluid outlet (13).

11. The damping device according to one of the preceding claims, **characterised in that** the damping housing (1) can be fixed to third-party components in the manner of a fixing block with multiple fixing bolts (17), which surround the area (7, 9) of the fluid inlet (11) and/or fluid outlet (13).

## Revendications

1. Dispositif d'amortissement, notamment pour amortir ou prévenir des coups de bélier, comme des pulsations dans des circuits hydraulique d'alimentation, de préférence sous la forme d'un amortisseur de bruit, comprenant une enveloppe (1) d'amortissement entourant un espace (19) d'amortissement, qui a au moins une entrée (11) de fluide et au moins une sortie (13) de fluide, ainsi qu'un espace (19) de réception de fluide s'étendant entre l'entrée (11) de fluide et la sortie (13) de fluide, l'espace (19) de réception de fluide formant en même temps l'espace (19) d'amortissement,
dans lequel lorsque le dispositif est en fonctionnement, un courant de fluide passe suivant un sens (15) de passage dans l'espace (19) d'amortissement en direction de la sortie (13) de fluide en venant de l'entrée (11) de fluide, au moins des parties de l'espace (19) de réception de fluide s'étendant dans au moins une direction d'extension transversalement au sens (15) de passage, de sorte que l'espace (19) de réception de fluide s'élargit par rapport à l'entrée (11) de fluide ou la sortie (13) de fluide dans la direction d'extension,
dans lequel l'espace (19) de réception de fluide est voisin directement de l'entrée (11) de fluide et de la sortie (13) de fluide, et dans lequel l'espace (19) de réception de fluide est fermé par deux parois (21, 25) de démarcation parallèles entre elles de l'enveloppe (1)d'amortissement, **caractérisé en ce que** des parties de l'entrée (11) de fluide et de la sortie (13) de fluide s'étendent dans l'enveloppe (1) d'amortissement en alignement avec ces parois (21, 25) de démarcation.

2. Dispositif d'amortissement suivant la revendication 1, **caractérisé en ce que** l'espace de réception de fluide constitue un espace (19) creux constitué à la manière d'un disque à l'intérieur de l'enveloppe (1) d'amortissement.

3. Dispositif d'amortissement suivant la revendication 2, **caractérisé en ce que** l'espace (19) creux à la manière d'un disque est constitué de manière cylindrique ou polygonale.

4. Dispositif d'amortissement suivant l'une des revendications précédentes, **caractérisé en ce que** l'espace (19) de réception de fluide est constitué entre l'entrée (11) de fluide et la sortie (13) de fluide, sans obstacle, de manière à être libre d'élément d'amortissement.

5. Dispositif d'amortissement suivant l'une des revendications précédentes, **caractérisé en ce que** les diamètres de l'entrée (11) de fluide et de la sortie (13) de fluide, constitués sous la forme de trous dans l'enveloppe d'amortissement, sont de même dimension et cette dimension correspond à la distance entre les deux parois (21, 25) de démarcation.

6. Dispositif d'amortissement suivant l'une des revendications précédentes, **caractérisé en ce que** l'enveloppe (1) d'amortissement est constituée en plusieurs parties comprenant une partie (3) de fond en forme de pot qui reçoit un évidement (41) médian en forme de disque, ayant l'une des parois (21) de démarcation ainsi que l'entrée (11) de fluide et la sortie (13) de fluide, et
comprenant une partie (5) de couvercle constituée à la manière d'un flasque, qui, par l'autre paroi (25) de démarcation, pénètre comme partie d'une tubulure (39) de pénétration à affleurement d'un évidement (41) médian, lorsque la partie (5) de couvercle est fixée à la partie (3) de fond.

7. Dispositif d'amortissement suivant la revendication 6, **caractérisé**
**en ce que** sur la tubulure (39) de pénétration, de la partie (5) de couvercle, est montée un dispositif d'étanchéité, notamment sous la forme d'une bague (45) d'étanchéité, qui est insérée dans une rainure (43) faisant le tour et qui rend l'espace (19) de réception de fluide, comme partie de l'évidement (41) médian, étanche par rapport à l'atmosphère ambiante.

8. Dispositif d'amortissement suivant la revendication 6 ou 7, **caractérisé en ce que** la partie (5) de couvercle a plusieurs trous (29), traversant opposés diamétralement par rapport à son axe (23) vertical qui, traversés par les vis (35) de fixation, fixent la partie (5) de couvercle à la partie (3) de fond.

9. Dispositif d'amortissement suivant la revendication 8, **caractérisé en ce que** les vis (35) de fixation sont disposés, en laissant libre la région (7, 9) de l'entrée (11) de fluide et de la sortie (13) de fluide, uniformément, suivant un pourtour extérieur de l'enveloppe (1) d'amortissement, qui entoure l'espace (19) de réception de fluide du type en disque.

10. Dispositif d'amortissement suivant l'une des revendications précédentes,
**caractérisé en ce qu'**à l'entrée (11) de fluide et/ou à la sortie (13) de fluide, est prévu dans l'enveloppe (1) d'amortissement un logement (47) pour une bague d'étanchéité, qui entoure l'entrée (11) de fluide et/ou la sortie (13) de fluide.

11. Dispositif d'amortissement suivant l'une des revendications précédentes,
**caractérisé en ce qu'**à la manière d'un bloc de fixation, ayant plusieurs boulons (17) de fixation qui entourent la région (7, 9) de l'entrée (11) de fluide et/ou de la sortie (13) de fluide, l'enveloppe (1) d'amortissement peut être fixée à des pièces tierces.
